# EUROPEAN PATENT APPLICATION

(11) **EP 4 841 154 A1**
(43) Date of publication of application: **18.11.2026**
(21) Application number: 25175619.3
(22) Date of filing: 12.05.2025
(51) Int. Cl.: F21S 9/03, H02J 7/35, H02J 7/04, H02S 40/38

(54) **LUMINAIRE AND METHOD FOR CHARGING A BATTERY OF A LUMINAIRE**

(71) Applicant: Tridonic GmbH & Co. KG, 6851 Dornbirn (AT)
(72) Inventor: Schneider, Miguel Philipp, 6851 Dornbirn (AT); Stark, Stefan, 6851 Dornbirn (AT); Romano, Fabio, 6851 Dornbirn (AT)
(74) Representative: Rupp, Christian

(57) **Abstract**

The invention relates to a luminaire (10), compromising: a lighting module (14), a battery (12) configured to power the lighting module (14), a photovoltaic (PV) module (11) configured to generate electrical power in response to incident light and to supply the electrical power to the battery (12) for charging the battery (12), a controller (13) configured to control the charging of the battery (12) from the PV module (11), and at least one communication interface (15) configured to receive weather data relating to a location of the luminaire (10). The controller (13) is configured to adjust a characteristic of a battery charging current provided by the PV module (11) based on the weather data.

## Description

### TECHNICAL FIELD OF THE INVENTION

The present invention relates generally to the field of lighting technology. More specifically, the invention relates to a solar luminaire and a method for charging a battery of a solar luminaire.

### BACKGROUND OF THE INVENTION

Outdoor luminaires are often battery powered, especially if they are not connected to a mains power supply. Such luminaires can be equipped with photovoltaic (PV) modules for charging the battery.

During high amounts of incident light, the PV module generates a relatively large amount of electrical energy, which results in a corresponding high amount of incoming battery charge current and thus fast charging of the battery. However, as a consequence of the high charging current, the battery of the luminaire is exposed to high thermal stress heating up the system. A frequent occurrence of this thermal stress can shorten the lifetime of the battery and, thus, reduce the operating time of the luminaire.

### SUMMARY OF THE INVENTION

In view of the above, it is an object of the invention to overcome the above-mentioned drawback and disadvantage. In particular, it is an object to increase the lifetime of a battery powered luminaire.

The foregoing and other objects are achieved by the features of the enclosed independent claims. Advantageous implementations of the present invention are further defined in the dependent claims.

According to a first aspect, the invention relates to a luminaire, compromising a lighting module; a battery configured to power the lighting module; a photovoltaic (PV) module configured to generate electrical power in response to incident light and to supply the electrical power to the battery for charging the battery; a controller configured to control the charging of the battery from the PV module; and at least one communication interface configured to receive weather data relating to a location of the luminaire. The controller is configured to adjust a characteristic of a battery charging current provided by the PV module based on the weather data.

This achieves the advantage that a battery powered luminaire is provided which is capable of adjusting a battery charging current, which is provided by a PV module of the luminaire, depending on a current or expected weather situation (e.g. the expected intensity of incident light or the expected duration of sunshine). For example, the luminaire automatically sets the battery charging current according to requirements of the current or expected weather situation.

The luminaire can be a solar luminaire, i.e., a luminaire equipped with a PV module. The luminaire may further be an outdoor luminaire, e.g. a streetlight.

The lighting module can comprise one or more LEDs (Light Emitting Diodes) which are powered by the battery via an operating device, for instance an LED driver.

In particular, the battery charging current is a current which is generated by the PV module in response to the incident light, e.g. sunlight, and which is forwarded to the battery for charging the battery.

The PV module may comprise a solar cell. In particular, the amount of electrical power generated by the PV module depends on an intensity of the incident light on the solar cell, e.g. on a solar irradiation. The battery of the luminaire may be sourced with electrical power from the PV module in response to incident light. The PV module may further comprise a converter configured to convert the electrical energy generated by the solar cell to a suitable voltage and current for charging the battery.

For instance, the controller may be a battery charge controller. The controller could be implemented by a processor, e.g. a microprocessor or an ASIC (Application-Specific Implemented Circuit), or a comparable logic component of the luminaire.

The at least one communication interface can receive weather data relating to the location of the luminaire. This communication interface can gather data from an internal and/or an external source. The source could also be an external computing device, e.g. a central control unit or server, or another luminaire which provides the communication data. Hereby, the communication interface may be communicatively connected to the controller and can forward the weather data to the controller.

In an implementation form of the first aspect, the characteristic of the battery charging current comprises a current profile and/or a current level of the battery charging current. For example, the battery charging cycles can be adjusted in this way.

This achieves the advantage that the adjusted battery charging current may prolong the lifetime of the battery due to reduced thermal stress on the battery.

In an implementation form, the weather data comprises weather forecast data.

In an implementation form, the weather forecast indicates an expected duration of incident light and/or an expected solar irradiation for a certain period of time in the future at the location of the luminaire. This achieves the advantage that the battery charge current can be adapted based on the expected energy production by the PV module in the future, in particular the near future.

In an embodiment, the controller is configured to reduce the battery charging current to a fraction of its maximum value based on the expected duration of incident light and/or the expected solar irradiation. This achieves the advantage that the thermal stress on the battery can be reduced by means of a reduced charging current, if it is expected, based on the weather data, that the PV module will provide sufficient energy over a longer period of time in the future.

In contrast, if the weather data implies that the PV module will only generate a high amount of energy for a short period of time, the battery charging current can be enhanced in order to use the energy provided by the PV module as efficiently as possible in the short time available.

For instance, the level of reduction of the battery charging current is dependent on the expected duration of incident light and/or the expected solar irradiation.

In an implementation form, the controller is configured to continuously or stepwise decrease the battery charging current as the expected duration of incident light and/or the expected solar irradiation increases. This achieves the advantage that high charge currents and, thus, high thermal stress on the battery can be avoided during periods of high power generation by the PV module.

In an implementation form, the weather data indicates a current weather condition, in particular a current solar irradiation at the location of the luminaire. This achieves the advantage that the battery charging current can also be adapted based on the current weather and thus the current energy produced by the PV module.

For instance, the controller sets the battery charging current to a fraction of its maximum value if the current solar irradiation exceeds a threshold value.

In an embodiment, the luminaire comprises an operating device, in particular a switched mode power supply, electrically coupled between the PV module and the battery, wherein the operating device is configured to forward the battery charging current from the PV module to the battery; wherein the controller is configured to control the operating device to adjust the characteristic of the battery charging current.

In particular, the controller is a component, e.g. an ASIC, FPGA (Field Programmable Gate Array) or microcontroller, of the operating device. As such, the controller can be configured to control an operation of the operating device, e.g. adjust its output current or voltage.

In an embodiment, the luminaire comprises a further operating device, in particular a DC/DC converter, electrically coupled to the battery and the lighting module, wherein the further operating device is configured to convert a DC voltage output from the battery to at least one different voltage level for supplying the lighting module.

For example, the further operating device is an LED driver.

In an implementation form, the at least one communication interface comprises a wireless communication interface, in particular a GSM interface. This achieves the advantage that the luminaire can receive the weather data in an efficient manner, e.g., from publicly accessible sources.

For example, the luminaire can be connected to a communication network, e.g. the internet, via the at least one communication interface and can receive the weather data from this network.

In an implementation form, the controller is configured to calculate an estimated electrical power generation by the PV module based on the weather data and the controller is further configured to compare said estimated electrical power generation to the actual electrical power generation by the PV module.

In an implementation form, the controller is configured to further adjust the characteristic of the battery charging current based on a deviation between the estimated electrical power generation and the actual electrical power generation.

This achieves the advantage that it could be detected if the PV module is functioning as expected or whether its performance is limited by external factors. For example, if the PV module is covered and/or shaded by another object, the actual electrical power generation will differ from the estimated electrical power generation, which can be evident from the detected deviation. In such a case, the controller could adjust the characteristic of the battery charging current based on the deviation between the estimated and the actual electrical power generation to compensate for the reduced performance of the PV module.

In an embodiment, the at least one communication interface is configured to receive communication data from one or more further luminaires and the communication data indicates an electrical power generated by respective further PV modules of the one or more further luminaires.

For instance, the luminaire is configured to forward information on the electrical power generated by its PV module to the one or more further luminaires via the at least one communication interface. The further luminaires may be of the same type as the luminaire, e.g. they also comprise a PV module for charging an internal battery.

In an implementation form, the controller is configured to compare the electrical power generated by the PV module to the electrical power generated by the further PV modules of the one or more further luminaires, wherein the controller is configured to further adjust the characteristic of the battery charging current based on said comparison. This achieves the advantage that it can be detected if the PV module is functioning in a reliable and efficient way or whether its performance is limited by external factors (e.g., shading objects), causing it to produce less energy than the further luminaires.

In an implementation form the at least one communication interface is configured to receive location data indicating the location of the luminaire in a geographical area and the controller is configured to further adjust the characteristic of the battery charging current based on the location of the luminaire. This achieves the advantage that location based factors which can affect the energy production by the PV module can be considered (e.g., shading by mountains at certain times, etc.).

According to a second aspect, the present invention relates to a method for charging a battery of a luminaire, wherein the battery is configured to supply electrical energy for powering a lighting module of the luminaire, the method comprising: generating electrical energy for charging the battery by means of a photovoltaic (PV) module of the luminaire, receiving weather data relating to a location of the luminaire and controlling the charging of the battery from the PV module by adjusting a characteristic of a battery charging current provided by the PV module based on the weather data.

The method according to the second aspect of the invention can be used to operate the luminaire according to the first aspect of the invention.

### BRIEF DESCRIPTION OF THE DRAWINGS

Exemplary embodiments of the invention are now further explained with respect to the drawings by way of example only, and not for limitation. In the drawings:
- Fig. 1: shows a schematic diagram of a luminaire according to an embodiment;
- Fig. 2: shows a schematic diagram of a luminaire according to an embodiment;
- Fig. 3: shows a graphical representation of weather forecast data according to an embodiment; and
- Fig. 4: shows a flow diagram of a method for charging a battery powered luminaire according to an embodiment.

### DETAILED DESCRIPTION OF EMBODIMENTS

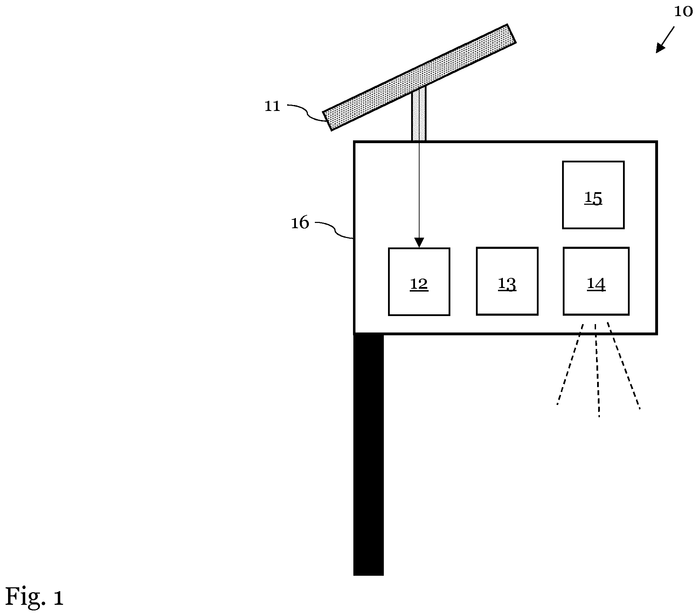

Fig. 1 shows a schematic diagram of a luminaire 10 according to an embodiment.

The luminaire 10 compromises a lighting module 14, a battery 12 configured to power the lighting module 14, a photovoltaic (PV) module 11 configured to generate electrical power in response to incident light and to supply the electrical power to the battery 12 for charging the battery 12, a controller 13 configured to control the charging of the battery 12 from the PV module 11, and at least one communication interface 15 configured to receive weather data relating to a location of the luminaire 10. The controller 13 is configured to adjust a characteristic of a battery charging current provided by the PV module 11 based on the weather data.

Thus, the luminaire 10 can adjust the battery charging current, which is provided by its PV module 11, depending on a current or expected weather situation as indicated by the weather data.

For instance, if the duration of incident light and/or solar irradiation is expected to be high for a longer period of time provided by the weather data, the battery charging current can be reduced which results in lower thermal stress for the battery 12. Whereas, if the duration of incident light and/or solar irradiation is expected to be high for a short period of time provided by the weather data, the battery charging current can be enhanced in order to use the energy provided by the PV module 11 as efficient as possible in the short time available. This weather dependent control of the battery charging current will be explained in more detail below.

The luminaire 10 can be a solar luminaire, i.e., a luminaire with a PV module as an energy source.

The luminaire 10 can be a battery powered outdoor luminaire, e.g. a streetlight. The luminaire 10 could also be a different type of battery powered luminaire which is equipped with a PV module.

The lighting module 14 can comprise one or more LEDs (Light Emitting Diodes) which are powered by the battery 12 via an LED driver.

The battery 12 and/or the controller 13 can be arranged in a housing 16 of the luminaire 10, as indicated in Fig. 1. However, the battery 12 and/ or the controller 13 could also be arranged outside of the housing 16.

In particular, the PV module 11 is configured to supply the electrical energy in form of the battery charging current for charging the battery 12.

For instance, the PV module 11 comprises a solar cell. The solar cell could be mounted to the luminaire 10, e.g. to a housing 16 of the luminaire 10.

The amount of electrical power generated by the PV module 11 depends on an intensity of the incident light on the solar cell, e.g. on a solar irradiation. The battery 12 of the luminaire 10 may be sourced with electrical power from the PV module 11 in response to incident light.

The luminaire 10 may further comprise an operating device which is switched between the PV module 11 and the battery 13 and which is configured to convert the electrical energy generated by the PV module 11 (e.g., its solar cell) to a suitable voltage and current for charging the battery 12. For instance, this operating device is a switched mode power supply (SMPS).

The controller 13 could be implemented by a processor, e.g. a microprocessor or an ASIC (Application-Specific Implemented Circuit), or a comparable logic component of the luminaire 10.

The controller 13 could be a component of the converter of the PV module 11.

The luminaire 10 may further comprise a DC/DC converter. For instance, the DC/DC converter is electrically coupled to the battery 12 and lighting module 14, and is configured to convert a DC voltage output from the battery 12 to at least one different voltage level for supplying the lighting module 14.

For example, the DC/DC converter is an LED driver or a component thereof. The operating device can also comprise a switched mode power supply (SMPS) for powering the lighting module 14.

The at least one communication interface 15 can receive the weather data from an internal and/or an external source. The source could be an external computing device, e.g. a central control unit or server, or another luminaire which provides the weather data. Hereby, the communication interface 15 may be communicatively connected to the controller 13 and can forward the weather data to the controller 13.

The at least one communication interface 15 comprises a wireless communication interface, e.g. a GSM interface, which is configured to receive the weather data or other communication data. Alternatively, the communication interface could be a 3G interface (e.g. UMTS), a 4G interface, a 5G interface, or a different type of wireless network interface. The luminaire 10 could be connected to the internet via the communication interface 15 for receiving the weather data.

The weather data can be weather forecast data.

For instance, the weather forecast data shows an expected duration of incident light and/or an expected solar irradiation for a certain period of time in the future (e.g. the next 24 hours) at the location of the luminaire 10 or more specifically of the PV module 11 of the luminaire 10. Thus, the weather forecast data can indicate how much energy is expected to be produced by the PV module 11 during the period of time in the future.

The controller 13 can take this weather forecast data into account to estimate the energy provided by the PV module 11 to the battery 12 during this time, e.g. during the next charging cycle(s). Based on this information, the controller 13 can set the characteristic of the battery charging current (e.g., charging cycles and speed) to ensure a sufficiently long operating time of the lighting module 13, while at the same time ensuring that the battery charging current is not unnecessarily high, as this puts thermal stress on the battery and reduces its lifetime.

The characteristic of the battery charging current, which is adapted by the controller 13, may comprise a current profile and/or a current level of the battery charging current. By adapting the current profile and/or current level, the controller 13 can adapt the battery charging cycle(s) and the battery charging speed.

For example, the controller 13 is configured to reduce the charging current to a fraction of its maximum value based on the expected duration of sunshine and/or the expected solar irradiation.

In particular, the controller 13 continuously or stepwise decreases the charging current as the expected duration of sunshine and/or the expected solar irradiation increase. In this way, the thermal stress on the battery 12 can be reduced by means of a reduced battery charging current, if it can be assumed that the PV module 11 will provided sufficient energy over a longer period of time in the future.

In addition or alternatively, the controller 13 can be configured to decrease the battery charging current to a predetermined value or a predetermined fraction of its maximum value when the expected duration of incident light or the expected solar radiation exceeds a respective threshold value.

The controller 13 can also be configured to enhance the battery charging current (e.g., from a lower to a bigger fraction of its maximal value) when the weather forecast data indicate that the expected duration of incident light and/or the expected solar irradiation decrease. In this way, it can be ensured that the battery is charged efficiently even if the PV module 11 only provides energy for a short period of time.

For example, if the duration of incident light and/or solar irradiation is expected to be high (e.g., exceed a certain threshold value) for the next six hours, the battery charging current is reduced to 30 percent of its maximum value. If the duration of incident light and/or solar irradiation is expected to be high for the next three hours, the battery charging current may be reduced to 50 percent of its maximum value. For one hour high intensity of incident light and/or solar irradiation, the battery charging current may be reduced to 80 percent of its maximum value, respectively.

Moreover, the weather data could also indicate a current weather condition, in particular a current solar irradiation at the location of the luminaire. In this way, the controller 13 could also take current weather conditions into account when adjusting the battery charging current. For instance, the controller 13 sets the battery charging current to a fraction of its maximum value if the current solar irradiation exceeds a threshold value.

An issue may arise when such a solar powered luminaire 10 is permanently shaded by another object, e.g. a building, a tree or another obstacle. This could negatively affect an automatic adjustment of the battery charging current based on the weather data, such that it cannot reach its full potential.

To overcome this issue, the controller 13 could be configured to calculate an estimated electrical power generation by the PV module 11 based on the weather data. For instance, the controller 13 could calculate how much energy is expected to be produced by the PV module 11 for a forecast solar irradiation and/or duration of incident light. The controller may then be configured to compare said estimated electrical power generation to the actual electrical power generation by the PV module 11. In this way, the controller 13 can detect that the produced energy does not match the expected energy production and can deduce that the PV module 11 is shaded by another object.

For instance, the controller 13 may be configured to further adjust the characteristic of the battery charging current based on a deviation between the estimated electrical power generation and the actual electrical power generation.

The controller 13 can learn from a mismatch from the comparison between the actual power generation and the expected power generation of the PV module. Overtime, the controller 13 can detect clear patterns which help to individually adjust the charging cycles for the luminaire 10 in dependence of its surroundings. An advantage of this approach is that it does not require additional hardware.

For instance, in case the luminaire 10 is shaded and the weather data indicates good weather (i.e., high solar irradiation), the charging current can be reduced to a certain value (e.g., 10% of its maximum). Should the PV module 11 for some reason produced more power than this threshold, the battery charging current could be reduced further. Should the PV module 11 however produce less current, this is also good from a battery and service life perspective.

According to a further example, the at least one communication interface 15 is configured to receive communication data from one or more further luminaires. The received communication data can indicate an electrical power generated by respective further PV modules of the one or more further luminaires. For instance, the luminaire 10 is configured to also forward information on the electrical power generated by its PV module 11 to the one or more further luminaires via the at least one communication interface 15. The further luminaires may be of the same type as the luminaire 10, e.g. they also comprise a PV module 11 for charging an internal battery 12.

The controller 13 can be configured to compare the electrical power generated by the PV module 11 to the electrical power generated by the further PV modules of the one or more further luminaires and to further adjust the characteristic of the battery charging current based on said comparison. For instance, based on the comparison of the electrical power produced by the PV module 11 and the respective PV modules of the further luminaires, it can be detected if the PV module 11 is functioning in a reliable and efficient way or whether its performance is limited by external factors (e.g., shading objects), such that it produces less power than the PV modules further luminaires.

For instance, the luminaire 10 and the further luminaries can be arranged in a mesh, e.g. a streetlight mesh.

Furthermore, the at least one communication interface 15 may be configured to receive location data indicating the location of the luminaire 10 in a geographical area and the controller 13 is configured to further adjust the characteristic of the battery charging current based on the location of the luminaire 10. Thus, location based factors which can affect the energy production by the PV module 11 can be considered (e.g. shading by mountains at certain times, etc.).

The location data can comprise GPS or other positioning data.

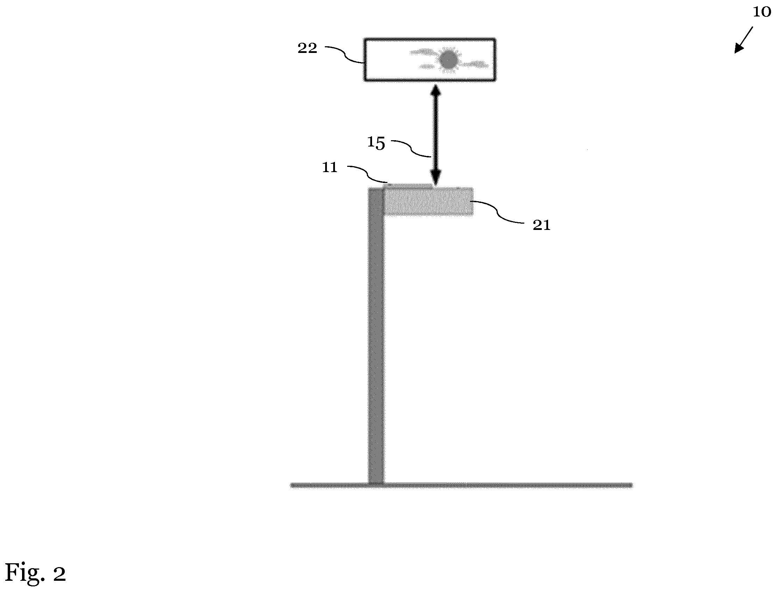

Fig. 2 shows a schematic diagram of the luminaire 10 according to an embodiment.

In the example shown in Fig. 2, the luminaire 10 is a street light, wherein the PV module 11 is embedded in a head 21 of the street light, which also houses the lighting module 13.

The communication interface 15 may be embedded in the head 21 or a different component of the streetlight. The luminaire 10 can be connected to the internet 22 via the interface 15 for receiving the weather data.

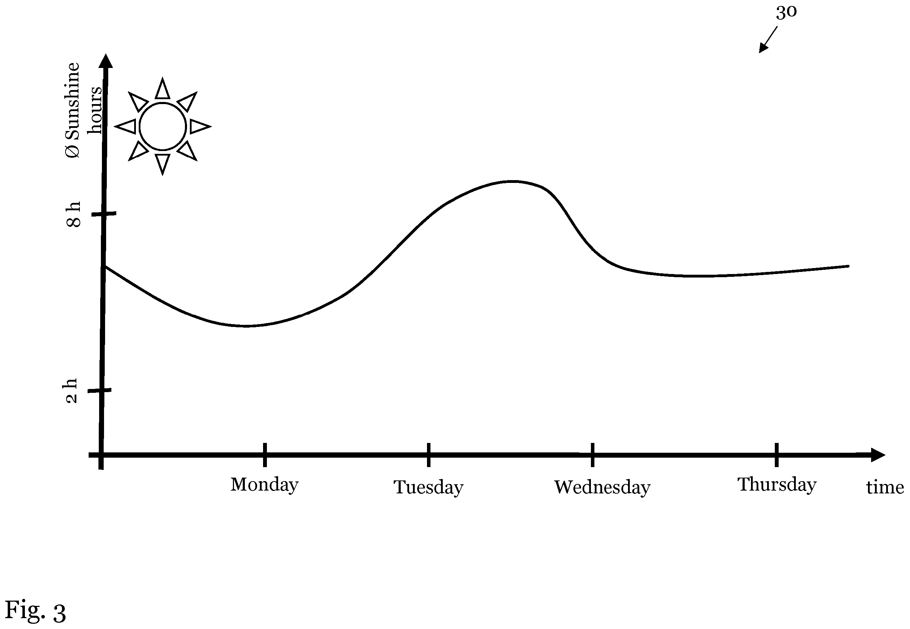

Fig. 3 shows a graphical representation of the weather forecast data 30 according to an embodiment.

In the example shown in Fig. 3, the weather forecast data 30 indicates the expected hours of sunshine over the next few days.

For example, if the weather forecast data 30 shows that a day will be sunny and without clouds, there is no need for charging the battery very fast on this day. In that case the battery can be charged slowly over the day. This reduces the thermal stress on the battery and therefore increases the battery lifetime.

Alternatively, the weather forecast data could also show a change in solar irradiation over a certain period of time in the future (e.g., 12, 24 or 48 hours).

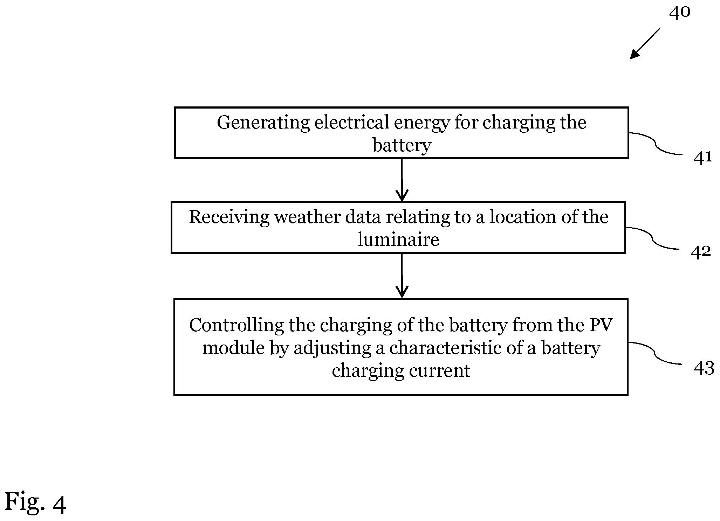

Fig. 4 shows a flow diagram of a method for charging a battery 12 of a luminaire 10, wherein the battery 12 is configured to supply electrical energy for powering a lighting module 14 of the luminaire 10 as, e.g. shown in any one of Figs. 1 and 2.

The method 40 comprises the steps of: generating 41 electrical energy for charging the battery 12 by means of a photovoltaic (PV) module of the luminaire 10; receiving 42 weather data relating to the location of the luminaire 10; controlling 43 the charging of the battery 12 from the PV module 11 by adjusting a characteristic of a battery charging current provided by the PV module 11 based on the weather data.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A luminaire (10), comprising:
a lighting module(14);
a battery (12) configured to power the lighting module (14);
a photovoltaic, PV, module (11) configured to generate electrical power in response to incident light and to supply the electrical power to the battery (12) for charging the battery (12);
a controller (13) configured to control the charging of the battery (12) from the PV module (11); and
at least one communication interface (15) configured to receive weather data relating to a location of the luminaire (10);
wherein the controller (13) is configured to adjust a characteristic of a battery charging current provided by the PV module (11) based on the weather data.

2. The luminaire (10) of claim 1,
wherein the characteristic of the battery charging current comprises a current profile and/or a current level of the battery charging current.

3. The luminaire (10) of claim 1 or 2,
wherein the weather data comprises weather forecast data.

4. The luminaire (10) of claim 3,
wherein the weather forecast data indicates an expected duration of incident light and/or an expected solar irradiation for a certain period of time in the future at the location of the luminaire (10).

5. The luminaire (10) of claim 4,
wherein the controller (13) is configured to reduce the battery charging current to a fraction of its maximum value based on the expected duration of incident light and/or the expected solar irradiation.

6. The luminaire (10) of claim 4 or 5,
wherein the controller (13) is configured to continuously or stepwise decrease the battery charging current as the expected duration of incident light and/or the expected solar irradiation increase.

7. The luminaire (10) of any one of the preceding claims,
wherein the weather data indicates a current weather condition, in particular a current solar irradiation at the location of the luminaire (10).

8. The luminaire (10) of any one of the preceding claims,
wherein the luminaire (10) comprises an operating device, in particular a switched mode power supply, electrically coupled between the PV module (11) and the battery (12), wherein the operating device is configured to forward the battery charging current from the PV module (11) to the battery (12);
wherein the controller (13) is configured to control the operating device to adjust the characteristic of the battery charging current.

9. The luminaire (10) of any one of the preceding claims,
wherein the at least one communication interface (15) comprises a wireless communication interface, in particular a GSM interface.

10. The luminaire (10) of any one of the preceding claims,
wherein the controller (13) is configured to calculate an estimated electrical power generation by the PV module (11) based on the weather data;
wherein the controller (13) is further configured to compare said estimated electrical power generation to the actual electrical power generation by the PV module (11).

11. The luminaire (10) of claim 10,
wherein the controller (13) is configured to further adjust the characteristic of the battery charging current based on a deviation between the estimated electrical power generation and the actual electrical power generation.

12. The luminaire (10) of any one of the preceding claims,
wherein the at least one communication interface (15) is configured to receive communication data from one or more further luminaires;
wherein the communication data indicates an electrical power generated by respective further PV modules of the one or more further luminaires.

13. The luminaire (10) of claim 12,
wherein the controller (13) is configured to compare the electrical power generated by the PV module (11) to the electrical power generated by the further PV modules of the one or more further luminaires; and
wherein the controller (13) is configured to further adjust the characteristic of the battery charging current based on said comparison.

14. The luminaire (10) of any one of the preceding claims,
wherein the at least one communication interface (15) is configured to receive location data indicating the location of the luminaire (10) in a geographical area; and
wherein the controller (13) is configured to further adjust the characteristic of the battery charging current based on the location of the luminaire (10).

15. A method for charging a battery of a luminaire (10), wherein the battery (12) is configured to supply electrical energy for powering a lighting module (14) of the luminaire (10), the method comprising:
generating (41) electrical energy for charging the battery (12) by means of a photovoltaic, PV, module (11) of the luminaire (10);
receiving (42) weather data relating to a location of the luminaire (10);
controlling (43) the charging of the battery (12) from the PV module (11) by adjusting a characteristic of a battery charging current provided by the PV module (11) based on the weather data.
